# EUROPEAN PATENT APPLICATION

(11) **EP 0 596 851 A1**
(43) Date of publication of application: **11.05.1994**
(21) Application number: 93870210.7
(22) Date of filing: 05.11.1993
(51) Int. Cl.: A01C 5/04, A01C 11/00

(54) **Machine for planting slip plants**

(30) Priority: 06.11.1992 BE 9200965
(71) Applicant: VISSER'S GRAVENDEEL HOLDING B.V., s'Gravendeel (NL)
(72) Inventor: Van den Eynde, Alfons, B-2860 Sint-Katelijne-Waver (BE); Van den Eynde, Willy, B-2860 Sint-Katelijne-Waver (BE); Van den Eynde, Kris, B-2860 Sint-Katelijne-Waver (BE)
(74) Representative: Pieraerts, Jacques

(57) **Abstract**

The machine according to the invention comprises a base frame (1), an intermediate frame (2) mounted onto this base frame (1) in a for and backwards movable way, and a carrier frame (4) mounted thereon in an up and downwards movable way, said carrier frame being provided underneath with planting irons (5). The carrier frame (4) is further provided with grabbing means (13) arranged for catching in their highest position one of the slip plants and for putting this plant during the downward movement of the carrier frame (4) into a planting hole made during a previous cycle. The grabbing means (13) are preferably fixed onto a chain system (17) which is in its turn fixed to the carrier frame (4) and whose chain (20) is blocked on one side with respect to the intermediate frame (2) whereby the vertical distance travelled by the grabbing means (13) is twice as large.

## Description

This invention relates to a machine for planting slip plants such as leek, cabbages, tree nursery plants and the like, which machine comprises a base frame in particular arranged for being mounted on a tractor, an intermediate frame mounted on said base frame in a for and backwards movable way, and a carrier frame for planting irons mounted on said intermediate frame in an up and downwards movable way and further first drive means for moving said carrier frame up and downwards with respect to the intermediate frame and second drive means for moving said intermediate frame backwards with respect to said base frame, substantially at the same speed as the forwards moving base frame, at least when said planting irons are pushed into the soil as a result of the downward movement of the carrier frame and for moving the intermediate frame forwards again when said planting irons are pulled back out of the soil as a result of the upward movement of the carrier frame.

Such a planting machine is known from the practice and is put for example on the market under the name "Masch-plantgatenmachine". Further such a machine is described in Belgian patent No. 731.080.

Both known machines are only provided for making planting holes in the soil. A drawback of these machines is therefore that the plants still have to be planted afterwards manually into these holes.

An object of the invention is now to provide a machine of the hereabove indicated type which does not only allow to make planting holes but which moreover allows to put in the same operation the slip plants in the planting holes made during the previous cycle.

To this end the machine according to the invention is characterized in that grabbing means are mounted on said up and downwards movable carrier frame, which grabbing means are arranged for catching at least one of said slip plants, substantially in the highest position of said carrier frame, and for placing the slip plant during the downward movement of the carrier frame behind one of said planting irons into a planting hole made during a previous cycle by this planting iron, the machine further comprising means for feeding said slip plants to the grabbing means.

Since the grabbing means are mounted on said carrier frame, they go up and down together with the planting irons, more particularly above the planting holes made during a previous cycle. In their uppermost position, the grabbing means catch a slip plant and plant this plant subsequently, during the downward movement of the carrier frame, in said planting holes.

In an effective embodiment of the machine according to the invention said grabbing means are fixed on an endless chain led around two chain-wheels which are disposed one above the other and which are rotatably mounted each around an axis which is fixed with respect to said carrier frame, said grabbing means are fixed on a portion of the chain situated on a first side between both chain-wheels while means are provided on said intermediate frame for blocking this chain between both chain-wheels on a second side of the chain, opposite said first side.

By the use of such a chain system, the vertical distance travelled by the grabbing means is twice as long as the vertical distance travelled by the planting irons or by the carrier frame. In this way, the means for feeding the slip plants to the grabbing means may be mounted on working level, which is important for placing the plants manually into these feeding means.

Further advantages and particularities of the invention will become apparent from the following description of a machine for planting slip plants according to a particular embodiment of the invention. This description is only given as example and is not intended to limit the invention. The reference numerals used in this description relate to the annexed drawings wherein :
Figure 1 shows schematically a side elevational view of a particular embodiment of the machine according to the invention ;
figure 2 shows schematically a side elevational view of the chain system for moving the grabbing means from the machine according to figure 1 up and downwards and of the means used therein for feeding the slip plants to these grabbing means ;
figure 3 shows schematically a front elevational view of the grabbing means from the machine according to figure 1 ;
figures 4 and 5 show schematically a top plan view of the grabbing means from figure 3, respectively in the open and in the closed position ;
figure 6 shows schematically a top plan view of the feeding means from figure 2 ; and
figure 7 shows schematically a top plan view of a possible variant embodiment of the feeding means.

In these different figures, the same reference numerals relate to the same or to analogous elements.

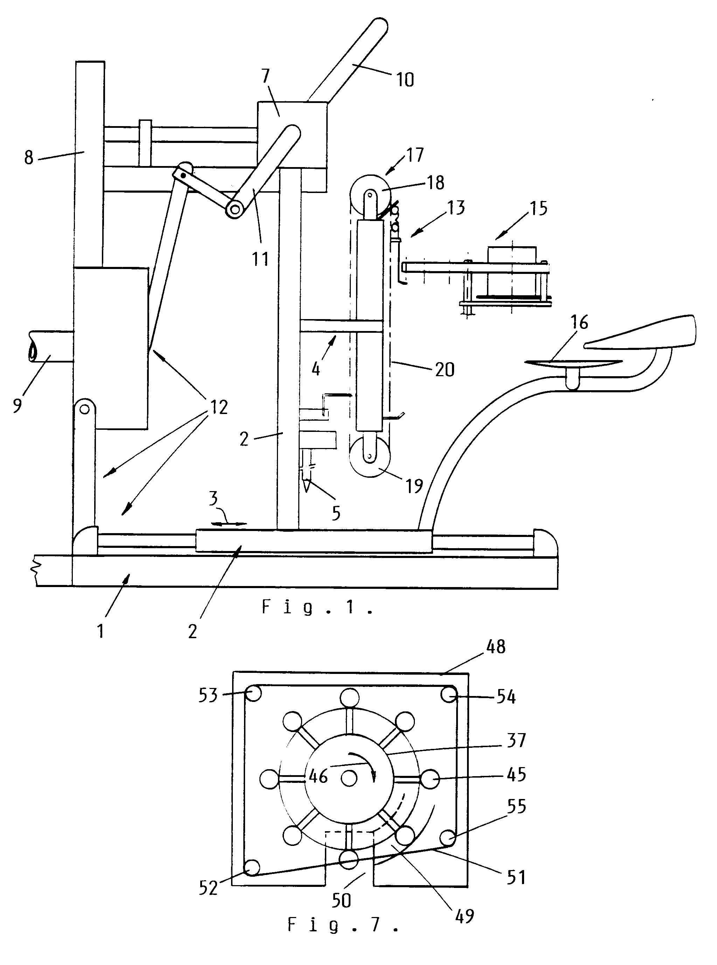

Figure 1 shows schematically a general side elevational view of a machine according to the invention in a particular embodiment. An important portion of this machine corresponds to a large extent to the machine which is nowadays put on the market under the name "Masch-plantgatenmachine" and which is suited for making planting holes in the soil. In the following description, that portion of the machine which is destined for making the planting holes will consequently only be descripted in brought outline. For a more thorough description of such a machine reference is made to Belgian patent No. 731,080. However, it will be clear that for the extension of the planting holes machine which is nowadays on the market to a planting machine according to the invention, some adaptations are required hereto which however do not belong to the essence of the invention.

The planting machine shown in figure 1 comprises in broad outline a base frame 1 which is arranged for being mounted on a tractor, an intermediate frame 2 which is mounted on the base frame 1 in a for and backwards movable way (according to arrows 3), and a carrier frame 4 for planting irons 5 which is mounted on the intermediate frame 2 in an up and downwards movable way (according to arrows 6). For moving the carrier frame 4 up and downwards, first drive means are provided while second drive means are provided for moving the intermediate frame 2 for and backwards during the forward movement of the tractor. These second drive means are more particularly arranged for moving the intermediate frame 2 backwards with respect to the base frame 1, at the same speed as the driving speed of the tractor, when making the planting holes, i.e. when said planting irons are pushed into the soil, so as to obtain planting holes instead of longitudinal planting slits.

Both the first and the second drive means are connected to a branch box 7 which is actuated through a gear-box 8 by the power take-off 9 connected to the tractor.

The first drive means for moving the carrier frame 4 up and downwards comprise an eccentric 10 which is mounted onto the branch bow 7 and which is situated in figure 1 behind this branch box. The second drive means also comprise an eccentric 11 which is situated in figure 1 in front of the branch box 7 and which actuates the intermediate frame 2 through a bar system 12. This second eccentric 11 can be adjusted for adapting the speed of the intermediate frame to the driving speed of the tractor. The planting distance can be adjusted by an adaptation of the gear-box 8.

Essential for the invention is the fact that grabbing means 13 are mounted on the carrier frame 4 for catching at least one of said slip plants 14, substantially in the highest position of the carrier frame 4, and for putting this slip plant 14 into a planting hole made during a previous cycle. In order to enable the grabbing means 13 to push the slip plant 14 just above a planting hole into the soil, the planting irons 5 are mounted on the carrier frame 4 on an adjustable distance in front of these grabbing means 13. In this way, the distance between planting irons 5 and grabbing means 13 can be adjusted to the planting distance. In addition to said grabbing means 13, the machine according to the invention comprises further means 15 for feeding the slip plants 14 to these grabbing means 13. The slip plants 14 are to be put into these feeding means 15 by a person sitting on the chair 16. As it appears clearly from figure 1, this chair 16 is mounted onto the intermediate frame 2 so that it follows the movements of this intermediate frame 2.

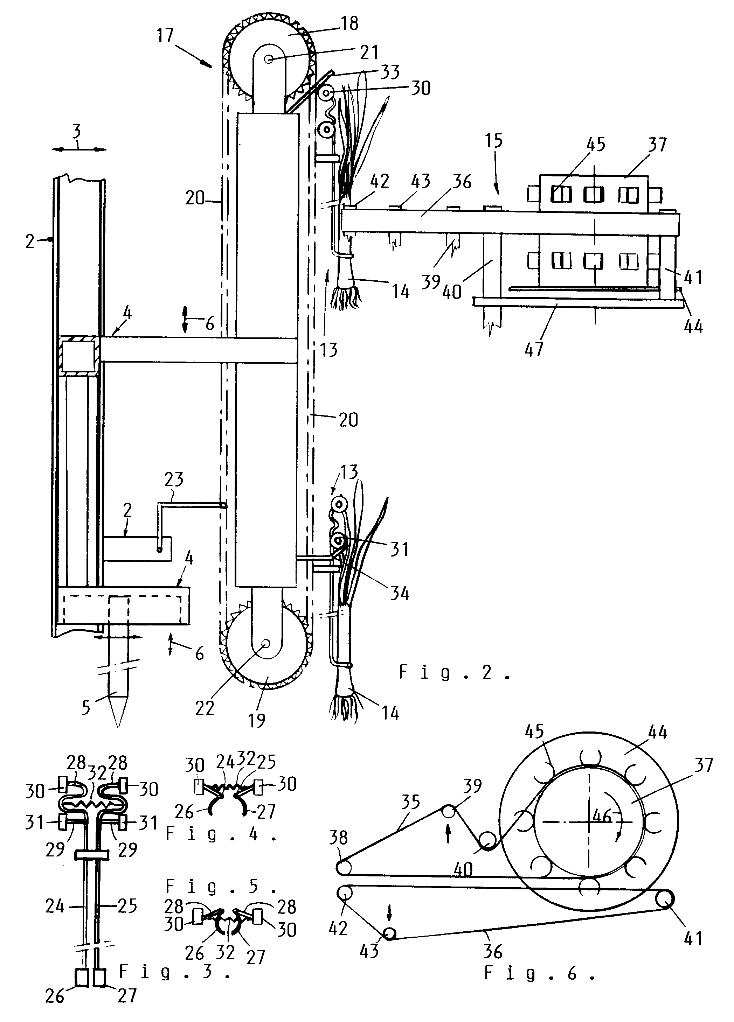

In the preferred embodiment as shown on a larger scale in figure 2, the grabbing means 13 are mounted onto a chain system 17. This chain system 17 comprises two chain-wheels 18, 19 disposed above one another and an endless chain 20 led around these chain-wheels. The axes 21, 22 of both chain-wheels 18, 19 are fixed with respect to the carrier frame 4 and undergo therefore the same movements. The chain 20, on the other hand, may be blocked on one side with respect to the intermediate frame 2 by means of blocking means 23 which are preferable engageable and disengageable. As a result thereof, the chain 20 will travel on the other side, more particularly on the side where the grabbing means 13 are fixed to this chain 20, a distance which is always twice as long as the distance travelled in a vertical direction by the carrier frame 4. This offers the important advantage that the grabbing means 13, which have to penetrate into the planting hole, rise up higher than when they would be fixed directly onto the carrier frame 4 so that providing of the slip plants 14 can be done on working level.

As it appears clearly from figure 3, the grabbing means 13 comprise, in the shown embodiment, two bars 24, 25 which are rotatable around their longitudinal axis and onto each of which a curved finger 26, 27 is provided for catching the slip plant 14, near the foot of this plant. At the top, each of these bars 24, 25 is provided with two levers 28, 29 having at their extremity a small wheel 30, 31 arranged for opening or closing the fingers 26, 27 by a rotation of the bars 24, 25. A tension spring 32 is hitched between both bars 24, 25 for maintaining the fingers 26, 27 either in the open or in the closed position. In both of these latter positions, the bars are therefore in a stable equilibrium position.

Both at the top and at the bottom of the chain system 17 two cams 33, 34 are provided for closing and respectively opening the fingers 26, 27. The uppermost cams 33 are positioned to cooperate with the uppermost wheels 30 when the grabbing means 13 reach substantially their highest position in order to snap in this way the open fingers 26, 27 into their closed position, around the slip plant 14 to be caught. When the grabbing means 13 reach then substantially their lowermost position, the lowermost cams 34 make the fingers 27, 28 to snap open again. When withdrawing the open fingers 27, 28 back out of the planting hole, they will rub against the walls of the planting hole and already fill this planting hole somewhat. Preferably, the machine further comprises means for spraying subsequently water into the planting hole a.o. to fill this further and also to clean the grabbing means 13 at the same time. These latter means are not shown in the figures and include a.o. a water reservoir mounted onto the machine.

For conveying the slip plants 14 to the grabbing means 13 in such a manner that these means can catch the slip plants 14 when they reach their highest position, the shown machine according to the invention is provided with two endless conveyer belts 35, 36 which run partially along one another for clamping the slip plants 14 between them and for feeding these plants in this way to the grabbing means 13. Figure 6 shows a top plan view of these feeding means 15. From this figure it appears that the first belt 35 is led around a drum 37 and then successively around a pulley 38 located near the grabbing means 13, a small tensioning wheel 39 and a further small wheel 40. This latter small wheel 40 is coupled through a drive belt 47 to a first pulley 41 of the second belt 36. This belt 36 is led near the grabbing means 13 around a pulley 42 which is resiliently urged towards the fixed pulley 38 of the other belt 35. With a small tensioning wheel 43, the tension of this second belt 36 can also be adjusted.

The drum 37 shows underneath a flange 44 onto which the slip plants 14 can be placed manually. Along its circumference, a number of holders 45 for the slip plants 14, for example eight holders 45 supporting these plants as well on the top as on the bottom, are provided on regular distances on the drum 37. As it appears clearly from figure 2, the belt 35 runs around the drum 37 between the upper and lower part of the holders 45.

The actuation of the feeding means 15 is carried out by a not shown mechanism which converts the upward movement of the carrier frame 4 into a rotational movement of the drum 37, according to arrow 46, and this each time over an angle equal to 360° divided by the number of holders 45 onto the drum 37. In order to achieve this, the drum 37 is fixed for example through the intermediary of a not shown pawl and ratchet mechanism onto the intermediate frame 2, the number of teeth of the ratchet wheel being equal to the number of holders 45 on the drum 37. In this way, the upward movement of the carrier frame 4 can be converted into a rotation of the ratchet wheel, for example by a lever system.

For planting the slip plants 14, the person sitting on the chair 16 has only to put the slip plants into the holders 45 on the drum 37. The number of drums 37, and hence the number of grabbing means 13, chain systems 17 and planting irons 5 being dependent on the number of rows which are planted simultaneously. By the rotation of the drums 37, the slip plants are conveyed between the belts 35, 36 to the grabbing means 13. Between the two pulleys 38 and 42, the slip plants 14 are caught underneath by the closing fingers 26, 27 of the rising grabbing means 13. During the downward movement of the carrier frame 4, the grabbing means 13 move downwards at a twice as high speed pulling thereby the slip plants 14 from between the pulleys 38 and 42. Subsequently, they push these plants 14 into the previously made planting holes. At the bottom in these planting holes, the fingers go open again and the mechanism rises up again.

From the hereabove given description, it appears clearly that the described machine does not only allow to make planting holes but moreover to plant during the same operation the slip plants therein.

Further it will be clear that the invention is not limited to the hereabove described embodiment but that all kinds of modifications can be applied thereto without leaving the scope of the present application.

The machine can for example be designed as an automotive machine so that it has not to be coupled to a tractor.

Further, variant embodiments of the feeding means 15 may in particular be considered. Figure 7 shows for example a top plan view of a variant of these feeding means 15. In this embodiment, the drum 37 is rotatably mounted onto a plate 48 which is fixed with respect to the intermediate frame 2. The holders 45 are tubular and consist also of an upper and a lower part. At the bottom, the slip plants 14 placed into these holders 45 rest therefore onto the fixed plate 48. Upon rotation of the drum 37 in the direction of arrow 46, the plants 14 pass over a downwards inclined portion 49 of the plate 48, whereby they penetrate deeper into the holder 45, and subsequently over an opening 50 in this plate 48. In their highest position, the grabbing means 13 reach the bottom of this opening 50 to catch the slip plants 14.

In order to prevent the slip plants 14 from falling through the opening 50 before being caught by the grabbing means 13, a circular clamping belt 51 is provided around the drum 37. This belt 51 is led around four small wheels 52, 53, 54, 55. From these small wheels, the wheel 55 can be adjusted in such a manner that the belt 51 clamps the slip plants 14 above the opening 50 in their holder 45, more particularly by exerting a pressure against the plants between the upper and lower part of this holder 45. The tension of the clamping belt 51 is further adjusted to allow the slip plant 14 to be pulled from below out of the holder 45 without damaging this plant.

## Claims

1. A machine for planting slip plants (14) such as leek, cabbages, tree nursery plants and the like, which machine comprises a base frame (1) in particular arranged for being mounted on a tractor, an intermediate frame (2) mounted on said base frame (1) in a for and backwards movable way, and a carrier frame (4) for planting irons (5) mounted on said intermediate frame (2) in an up and downwards movable way and further first drive means for moving said carrier frame (4) up and downwards with respect to the intermediate frame (2) and second drive means for moving said intermediate frame (2) backwards with respect to said base frame (1), substantially at the same speed as the forwards moving base frame (1), at least when said planting irons (5) are pushed into the soil as a result of the downward movement of the carrier frame (4) and for moving the intermediate frame (2) forwards again when said planting irons (5) are pulled back out of the soil as a result of the upward movement of the carrier frame (4), characterized in that grabbing means (13) are mounted on said up and downwards movable carrier frame (4), which grabbing means are arranged for catching at least one of said slip plants (14), substantially in the highest position of said carrier frame (4), and for placing the slip plant (14) during the downward movement of the carrier frame (4) behind one of said planting irons (5) into a planting hole made during a previous cycle by this planting iron (5), the machine further comprising means for feeding said slip plants (14) to the grabbing means (13).

2. A machine according to claim 1, characterized in that said planting irons (5) are mounted on said carrier frame (4) on an adjustable distance in front of said grabbing means (13).

3. A machine according to claim 1 or 2, characterized in that said grabbing means (13) are fixed on an endless chain (20) led around two chain-wheels (18, 19) which are disposed one above the other and which are rotatably mounted each around an axis (21, 22) which is fixed with respect to said carrier frame (4), said grabbing means (13) being fixed on a portion of the chain (20) situated on a first side between both chain-wheels (18, 19) while means (23) are provided on said intermediate frame (2) for blocking this chain (20) between both chain-wheels (18, 19) on a second said of the chain (20), opposite said first side.

4. A machine according to claim 3, characterized in that said blocking means (23) are engageable and disengageable.

5. A machine according to claim 3 or 4, characterized in that said grabbing means (13) comprise two bars (24, 25) rotatable around their longitudinal axis, which bars extend substantially in the longitudinal direction of said chain (20) and onto each of which a sidewards projecting finger (26, 27) is provided underneath for clamping said slip plant (14) therebetween, with resilient means being applied between both bars (24, 25), in particular a tension spring (32), in such a manner that both bars (24, 25) are rotatable from a first equilibrium position wherein said fingers (26, 27) are open, via an unstable equilibrium position, to a second equilibrium position wherein said fingers (26, 27) are pulled towards one another by said resilient means (32) so as to clamp said slip plant (14) therebetween and vice versa.

6. A machine according to claim 5, characterized in that at least one sidewards projecting lever (28, 29) is provided on both of said bars (24, 25), preferably near their uppermost extremity, while for each of both bars (24, 25) an upper (33) and a lower cam (34) are provided on said intermediate frame (2) cooperating with the lever (28, 29) of the respective bar (24, 25) for pushing both bars from their first equilibrium position into their second equilibrium position substantially upon reaching the highest position of the grabbing member (13) to catch said slip plant (14) and for pushing both bars (24, 25) from their second equilibrium position into their first equilibrium position substantially upon reaching the lowest position of the grabbing member (13) to release in this way said slip plant (14) in the planting hole.

7. A machine according to any one of the claims 1 to 6, characterized in that said means (15) for feeding the slip plants (14) to the grabbing means (13) are mounted onto said intermediate frame (2) and comprise two endless conveyer belts (35, 36) running at least partially along each other and being arranged for clamping the slip plants (14) in an upright position between them in such a manner that these plants still project over a predetermined distance below these belts (35, 36), with both belts (35, 36) being led near said grabbing means (13), in the highest position thereof, around a first (38) and respectively a second pulley (42), and said first pulley (38) being rotatable around a fixed axis with respect to said intermediate frame (2) while said second pulley (42) is rotatable around an axis which is pushed by resilient means towards the first pulley (38) so that slip plants (14) of a different thickness may be clamped and so that these plants (14) can be pulled out of between both conveyer belts (35, 36) by the grabbing means (13) during the downward movement of said carrier frame (4).

8. A machine according to claim 7, characterized in that a first (35) of both conveyor belts (35, 36) is led around a drum (37) onto which, outside the belt (35) led therearound, holders (35) for said slip plants (14), which are laterally open, are provided regularly distributed over the circumference of said drum, the second conveyer belt (36) being arranged so that when, upon rotation of said drum (37) over a predetermined angle, the first belt (35) pushes one of said slip plants (14) out of its holder (45), this plant (14) is caught between both belts (35, 36).

9. A machine according to claim 8, characterized in that said drum (37) is fixed through the intermediary of a pawl and ratchet wheel mechanism, having a number of teeth equal to the number of holders (45) on the drum (37), onto said intermediate frame (2), with means being provided for turning said ratchet wheel further over one tooth during each up and downward movement of the carrier frame (4).

10. A machine according to any one of the claims 1 to 6, characterized in that said means (15) for feeding the slip plants (14) to the grabbing means (13) comprise a fixed plate (48) mounted on said intermediate frame (2) and a drum (37) rotatably mounted on top of this plate (48), on which drum tubular holders (45) for the slip plants (14) are provided regularly distributed over its circumference, which holders are open at the bottom so that said slip plants (14) rest upon said plate (45), an opening (50) being provided in the plate (48) wherethrough the slip plants (14) may be pulled out of their holder (45) by the grabbing means (13) after rotation of said drum (37) over a predetermined angle.

11. A machine according to claim 10, characterized in that said holders (45) are composed of at least an upper and a lower part, a clamping belt (51) being provided for clamping the slip plant (14) at least above said opening (50) in such a manner in the respective holder (45) between both parts of the holder (45) that said plant can be pulled thereout from below.

12. A machine according to claim 10 or 11, characterized in that said fixed plate (48) has before said opening (50) a downward slope (49) for allowing the slip plant (14) to slide underneath out of the holder (45) before this holder (45) arrives above the opening (50).

13. A machine according to any one of the claims 1 to 12, characterized in that it comprises a water reservoir and means for spraying water from this reservoir into said planting holes after having made these planting holes.
